# EUROPEAN PATENT APPLICATION

(11) **EP 4 450 244 A1**
(43) Date of publication of application: **23.10.2024**
(21) Application number: 24170172.1
(22) Date of filing: 15.04.2024
(51) Int. Cl.: B27M 1/08, B23Q 3/06

(54) **MACHINE FOR MACHINING PARTS AND METHOD OF OPERATION THEREOF**

(30) Priority: 21.04.2023 IT 202300007932
(71) Applicant: SCM Group S.p.A., 47921 Rimini (RN) (IT)
(72) Inventor: NERI, Alessandro, 47921 RIMINI (RN) (IT)
(74) Representative: Tiburzi, Andrea

(57) **Abstract**

The present invention concerns a machine (M) for machining workpieces (P), such as wood, glass, fiberglass, plastic, metal, ceramic or similar panels, comprising: a moving element (2) for moving a piece (P) along a substantially horizontal advancement direction (X); a group (3) for working said workpiece (P), in its turn comprising a bi-rotary machining head (31), wherein said working group (3) is able to rotate around a first substantially horizontal axis of rotation and parallel to a first translational direction (Y), which is perpendicular to said advancement direction (X), and wherein said machining group (3) is able to rotate around a second rotation axis, parallel to a second translation direction (Z), which is substantially perpendicular to said feed direction (X) and to said first translation direction (Y); a first mechanical member for moving said machining group (3) along said first translational direction (Y); and a second mechanical member for moving said machining group (3) along said second translation direction (Z).

The present invention also concerns a method of operation of said machine (M).

## Description

The present invention concerns a machine for machining pieces, such as panels made of wood, glass, fiberglass, plastic, metal, ceramic or the like.

### Field of invention

In more detail, the invention concerns a machine of the mentioned type for the machining of wooden panels, designed and created in particular for the drilling of pieces, but which can be used for any use, which requires machining using an inclined work surface.

In the following the description will be directed to a drilling machine but it is clear that it should not be considered limited to this specific use.

### Prior art

As it is known, the combination of the mechanical, hydraulic, pneumatic and electronic components of a machine tool allows the realization of a specific mechanical process.

As is well known, there currently exist machine tools or work centers capable of performing more than one mechanical operation on a plurality of surfaces of the same work piece through a single pre-set configuration of the machining head of said machines.

These machines include a roller table, or roller conveyor, extending along a first horizontal direction, capable of supporting a piece resting on it and accompanying its movement along that first direction.

The workpiece is moved on the surface by appropriate movement means, comprising gripping means sliding on guides arranged on one or more sides of the roller conveyor and aligned along the first direction.

Said gripping means include grippers, having a pair of opposing jaws that move along a second vertical direction, perpendicular to the first horizontal direction, so as to be able to grip the piece at one of its sides before sliding it on the surface.

Currently there are machining centers on the market equipped with a plurality of movement axes and a tool exchange system. These machining centers can have a vertical axis, a horizontal axis, or include a double column to machine large workpieces.

Typically, machining by a machine tool comprises cutting a workpiece or removing material with the aid of one or more tools. Typical examples of these machining comprise, but are not limited to, milling, boring, threading, and drilling.

Currently, the types of machines that move the workpiece on the plane along a first direction have a machining unit that moves along the two directions, or axes, perpendicular to the first; consequently, the machining operations on the piece are carried out by combining the movements of the piece along the first direction, and of the machining group along the other two.

As it is known, the assembly and/or interchange of tools during the different steps of machining the workpieces may require, for example, in the case of four-axis machines, the use of heads for tool change.

These heads are rather expensive, and are necessary in cases where the rotation axis of the electrospindle does not coincide with the orientation axis that the tool must have to carry out a specific process.

It is clear that this procedure is expensive both economically and in terms of components. In fact, the machine must be equipped with a sufficient number of tools and/or heads to carry out the machining according to the different directions, and each head must be coupled with the suitable tool.

Furthermore, due to the presence of wheels and mechanical transmissions, the heads limit the rotation speed with which the electrospindle can be operated, reducing the maximum machining speed and, in general, the performance of the machine. For example, the reduced machining speed, other conditions being equal, causes a smaller quantity of material removed by the tool.

Furthermore, the heads are subject to constant and high wear, and therefore, they must be replaced frequently.

Furthermore, a greater number of tools or heads require an equal number of corresponding seats in the machine's tool magazines.

Finally, all the drawbacks described so far cause an increase in the production costs of such machine tools.

In this regard, the use of five-axis machine tools or machining centers is known.

The use of five-axis machine tools presents technical problems related to the rotation of the head of these machine tools. In fact, the rotation of a head of a five-axis machine implies problems in controlling the rotation of the electrospindle connected to it and, possibly, of other elements that can rotate together with the head or as a result of said rotation of the head.

It appears apparent that the complexity of controlling the rotation of the head and the intrinsic increase in the work space due to said rotation requires means capable of allowing a relative movement of the tools with respect to the piece to be worked and along a plurality of axes of the machine, such as to guarantee the machine itself flexibility to reach a given work configuration that allows operations on the workpiece to be carried out efficiently.

A further drawback of these machines is due to the fact that the means for clamping the workpiece to be machined are fixed, extending the time required for tooling and positioning the workpiece on the surface before starting machining.

### Purpose of the invention

In light of the above, it is therefore the aim of the present invention to provide a machine tool for working wooden panels or similar, and capable of carrying out tool changes without using heads intended for said tool change.

Another purpose of the invention is to reduce the times to move from a specific configuration suitable for carrying out an operation to a following one for carrying out a new operation. In fact, with current machines, to change the inclination angle of the tilting heads, it is necessary to disassemble the heads, then set the new inclination angle and reassemble them in the machine with the angle set as defined. Therefore, for each new operational configuration that requires changing the angle of the head, it is necessary to repeat the operation of disassembling, tilting and reassembling the head.

A further purpose of the present invention is to provide the tools necessary for carrying out the method and the apparatus which carry out this method.

### Object of the invention

These and other results are obtained according to the invention with a machine tool or a working center for machining wooden or similar workpieces which includes a substantially horizontal piece handling means and a bi-rotating head capable of rotating around a two axes of rotation and to translate along two directions parallel to said axes of rotation.

Therefore, the specific object of the present invention is a machine for machining parts as defined in claim 1.

Preferred embodiments are defined in the dependent claims.

### Brief description of the figures

The present invention will be now described, for illustrative but not limitative purposes, according to its preferred embodiments, with particular reference to the figures of the enclosed drawings, wherein:
figure 1 shows from above a machine of the mentioned type, object of the present invention, in a first working configuration;
figure 2 shows from above a machine of the mentioned type, object of the present invention, in a second working configuration;
figure 3 shows, in section, a bi-rotary head that performs an operation on a panel;
figure 4 shows, in section, a bi-rotating head, inclined with respect to a panel to be machined, which performs an operation on the panel;
figure 5 shows, in section, a bi-rotating head that performs an operation on a panel, parallel to a main surface of said panel; and
figure 6 shows, from above, a handling gripper according to the present invention which holds a panel having a plurality of holes.

### Detailed description

In the various figures the similar parts will be indicated with the same reference number.

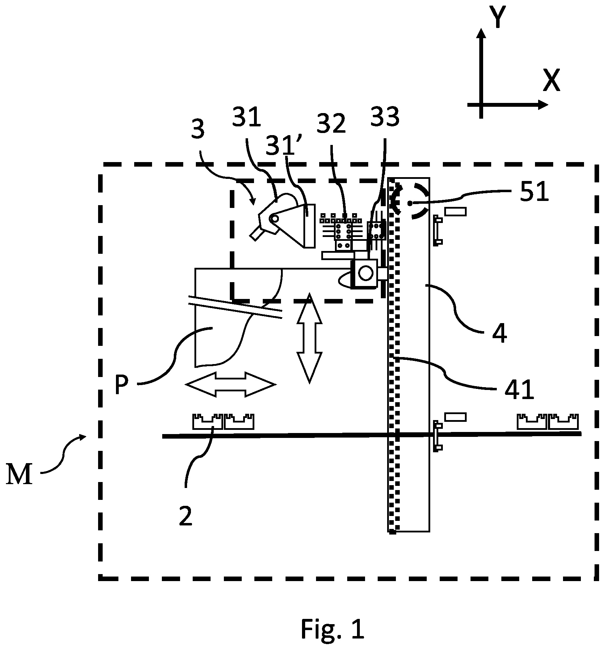

Referring to figure 1, a machine M is described for machining pieces P, such as panels made of wood, glass, fiberglass, plastic, metal, ceramic or the liker, seen from above.

The machine M comprises a means or element 2 for moving the piece P to be machined along a preferential direction and a working group 3, which, in turn, comprises a machining head.

The machine M can also comprise a base, which is substantially horizontal, and a working plane.

According to some embodiments, said working plane is arranged inclined with respect to a horizontal reference, for example, the ground or said base.

Said machining head is a bi-rotating head 31 capable of rotating around two axes substantially perpendicular to the direction of movement of the piece P.

Furthermore, said machining head is able to translate along two directions perpendicular to each other and perpendicular to the movement direction of the piece P, as will be described below.

In particular, the working group 3 is able to translate along a first translation direction Y, described below, by means of a first mechanical member which moves said group 3 or said bi-rotating head 31.

Similarly, the working group 3 is able to translate along a second translation direction Z, described below, by means of a second mechanical member which moves said group 3 or the bi-rotating head 31.

According to some embodiments, said first mechanical member includes at least one sliding guide 41, or other movement means, for moving the working group 3.

According to some embodiments, said second mechanical member comprises at least one slide 51 for moving the working group 3.

Always referring to figure 1, with a XY reference system the axes to which the movement direction of the piece P (parallel to the Y), and a first movement direction of the machining head (parallel to Y axis) are defined.

The numeral reference 4 indicates a cross member that extends along a first translation direction substantially parallel to a reference axis Y. The numerical reference 41 indicates a sliding guide integral with said cross member 4.

Furthermore, said cross member 4 extends substantially parallel to a horizontal reference, for example, the ground or said base of said machine M.

Said sliding guide 41 is configured to slide said working group 3.

As can be seen from figure 1, the numerical reference 51 indicates a slide that moves along a second translation direction, which is substantially perpendicular to the direction of advancement (parallel to said X axis) of the piece P and substantially perpendicular to said first direction of translation (parallel to said Y axis).

Said at least one slide 51 for the movement of said working group 3 extends along a second translation direction Z, not visible in figure 1, which is substantially perpendicular to said advancement direction X of the piece P and to said first translation direction Y of the working group 3. In particular, said slide 51 is integral with an upright 5, which extends along the second translation direction Z, perpendicular to said advancement direction X and to said first translation direction Y.

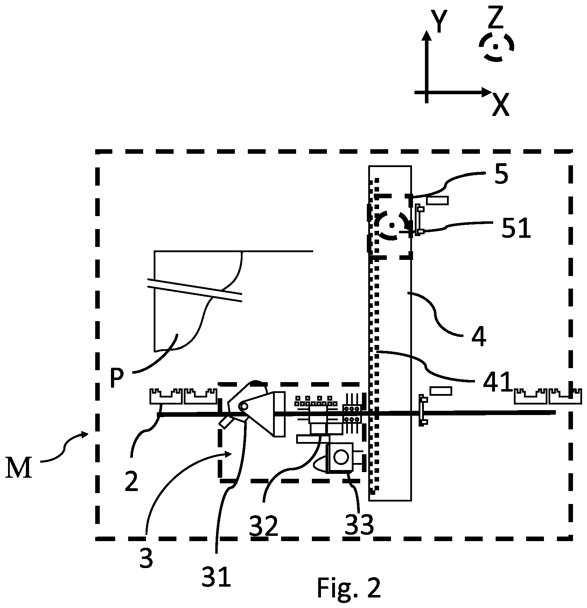

Referring to figure 2, the profile of said upright 5 is indicated by a discontinuous rectangle.

Said sliding guide 41 and/or said slide 51 can be guides and/or slides of the rolling type or include a lubricant along their main length to reduce friction and facilitate the movement of the working group 3.

The working group 3 can also include a machining tool, for example, a drilling head 32.

In some embodiments, the working group 3 may include a cutting tool, for example, a blade 33.

Furthermore, said working group can include a support 31' for the bi-rotating head 31.

Said moving element 2 for moving a piece P can comprise at least one gripper, a suction cup and/or another element capable of fixing the piece P to be machined.

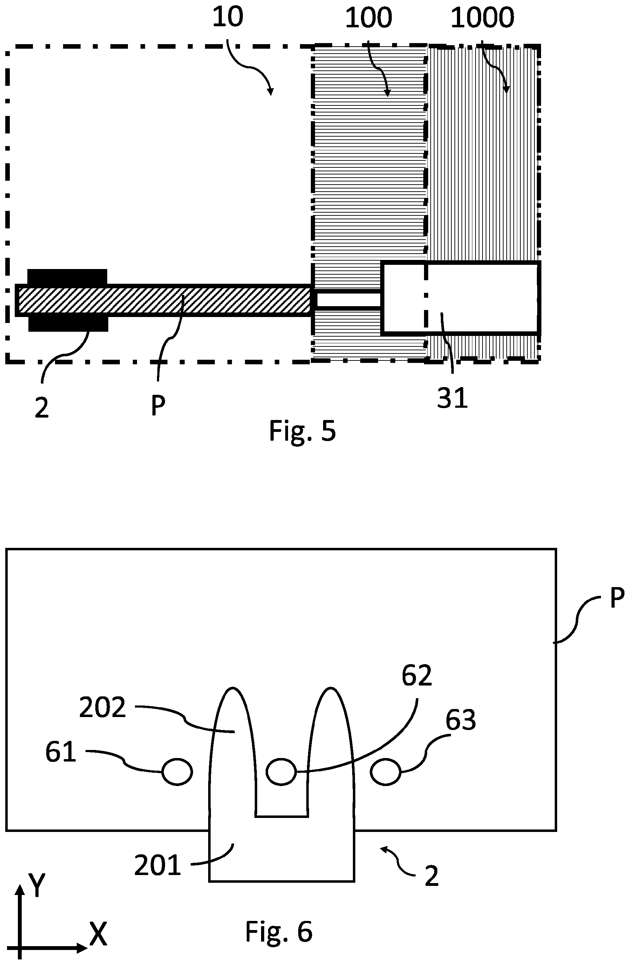

Referring to figure 6, the moving element 2 comprises a jaw equipped with a main body 201 and two gripper or gripping elements 202 for gripping the piece P to be machined.

Again according to figure 6, said gripping elements 202 extend perpendicular to said direction of advancement (X) and each include a distal end that protrudes with respect to said body 201.

According to some embodiments, the gripper 2 has a shaped profile such that, when the machine M is configured to drill the piece P, said gripper 2 is able to maximize the drilling efficiency, even when a drilling pitch is required very small.

In fact, a gripper without a profile equipped with two elements 202 projecting the main body 201 limits the ability to drill the panel P; this gripper allows the panel to be drilled only outside the perimeter defined by the gripper itself, for example producing the holes 61 and 63 shown in figure 6. Therefore, the minimum drilling pitch is given by said gripper perimeter. In this context, the only way to reduce the pitch would be to separate the gripper from the panel and relocate the gripper to another location on the panel.

The gripper 2, shown in figure 6, however, allows the panel P to be drilled also between the two gripping elements 202, for example the hole 62, and is therefore able to reduce the drilling pitch without having to carry out further steps, for example, without having to separate said gripper 2 from said panel P.

Furthermore, the machine M may include brushes or support wheels 22, described below.

Now referring to figure 2, the machine M of figure 1 is represented with said working group 3 in a second configuration, different from the first configuration of the working group shown in figure 1. In particular, the working group 3 is translated along said first translation direction Y.

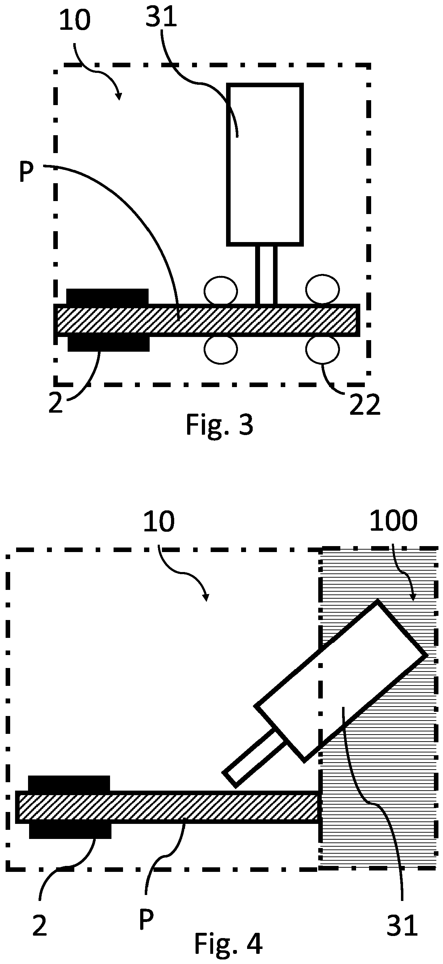

Referring to figures 3, 4, and 5, a working space 10, 100, or 1000, is identified by the space formed between a bi-rotary machining head 31 and a panel P.

As can be seen from figure 3, a bi-rotating head is arranged perpendicular to a main surface of said panel P to be machined. In this case, the work space 10 appears limited by the dimensions of the panel P.

The numerical reference 22 indicates a plurality of elements to maintain the panel P from below and above, for example by means of brushes or support wheels.

Referring to figure 4, when the bi-rotating head of figure 3 is rotated to perform an inclined machining, for example, of an angle between 0 and 90° with respect to a main surface of said panel P, the working space increases and is equal, for example, to the space determined by the numerical references 10 and 100.

As can be seen from figure 5, the case in which the working space is maximum is given by a 90° rotation of the bi-rotating head compared to the configuration in figure 3. In fact, in this case, the resulting space is given by the sum of the spaces indicated by the numerical references 10, 100, and 1000.

In some embodiments said working surface (not shown in the figures) is inclined at an angle between 50° and 90° with respect to said horizontal reference.

In some embodiments said working surface is inclined at an angle between 60° and 80° with respect to said horizontal reference.

In this way, the machine can be defined as a para-vertical machine, in which said inclination offers greater stability when loading or unloading the pieces compared, for example, to a vertical machine.

The operation of the machine M described above is as follows.

When it is desired to machine, for example drill, a piece P using a machine M, said panel P can be loaded on the machine, set a machining angle of said bi-rotating head around said first translation direction Y and an machining angle of said head around said second Z translation direction.

The loading of the panel occurs substantially in the same way also for a machine M comprising a working surface arranged inclined with respect to a horizontal reference.

In some examples, loading the part or panel is not necessary. For example, when a machining is repeated or a second machining is applied to the same panel, said panel is preloaded.

Setting the machining angle may include defining or predefining a machining angle and rotating said bi-rotary head to achieve said predefined angle.

Once said panel P has been loaded, said panel P is moved along said advancement direction X, which is substantially parallel to said horizontal reference.

In particular, the movement of panel P along the advancement direction can also occur for pre-loaded panels. In fact, it may be advantageous and/or necessary to move the panel when the tool is changed and/or when it is desired to machine a portion of the panel that has not been previously machined because it cannot be reached by the tool.

The movement of the panel P occurs through at least one moving element 2.

In some embodiments, said moving element 2 may comprise a fixing element of the piece P to guarantee the stability of the piece during its movement along X. In this way, said fixing element can eliminate, or at least reduce unwanted deviations of the piece P in a direction different from the movement direction X of said piece P.

When said working group 3 is positioned at an angle capable of machining the piece P, which has been placed on the working surface at a pre-established position, for example, close to said working group 3, it moves, for example, the working group 3 is pushed or pulled along a sliding guide 41, which, as mentioned, is integral with a cross member 4 arranged along a first translation direction Y. The working group 3 is also pushed or pulled along a second translation direction Z, causing it to slide on said slide 51.

In some embodiments, the movement of the working group 3 along Y and/or along Z can be controlled automatically, for example by means of a logic control unit of the machine M, and is obtained by means of movement means.

Examples of machines that comprise an automatic control of said movement are numerical control machining centers.

In some embodiments, said working group 3 can be moved by said movement means, such as electric motors and external robotic actuators.

Said movement along a sliding guide 41 allows said working group 3 to be moved in a direction substantially perpendicular to said advancement direction X and substantially parallel to said horizontal reference.

Said movement along a slide 51 allows said working group 3 to be moved in a direction substantially perpendicular to said advancement direction X and to said first translation direction Y.

Consequently, said second translation direction Z is substantially perpendicular to said horizontal reference.

According to some embodiments, said machine M includes at least one cross slide capable of moving said piece P along said first translation direction Y and along said second translation direction Z.

Said cross slide can represent a flexible and low-cost solution for maintaining the perpendicularity between said first Y and second Z translation directions.

In particular, the setting of the angles, the movement of the piece P and the movement of the working group 3 allows obtaining a desired position for machining the piece P.

When the desired position is reached, it is possible to activate the tool coupled to said bi-rotary head and work the piece P.

Referring now to figures 3-5, a machining of the piece P, in which the machining head, or equivalently, the tool, is arranged perpendicular to the piece, as for example in figure 3, can involve the use of elements 22 for keep panel P still. Although the use of these elements 22 is envisaged in some embodiments, when said head or said tool are rotated to carry out machining with a certain inclination, for example having an angle other than 90° with respect to the surface of the piece P to be machined, the presence of brushes, support wheels, or other elements 22 present on the working surface in a support base for said panel can limit the machining of the piece, for example, preventing some operations of the tool on said piece or increasing its operational complexity .

In some embodiments, the support base can include a means of transporting and supporting said piece (P).

Therefore, the handling of the workpiece by a moving element 2, which does not limit the operations of the tool on the workpiece P is preferred.

Machining examples include the drilling of piece P, for which movement using grippers 2 can avoid problems related to brushes, suction cups arranged on a support base for said panel or the like.

### Advantages

An advantage of the present invention is the possibility of moving the piece to be worked by means of a moving means.

Advantageously, when the moving means includes a gripper which fixes the piece, it is not necessary to create or use a table having blocking mechanisms, for example, by vacuum.

Furthermore, the presence of mechanical movement elements, such as a sliding guide along Y and a slide along Z, favor the movement of the working group 3 in a controlled manner throughout the entire manufacturing process.

Therefore, these sliding guides and/or slides offer greater precision in machining since the latter also depends on the relative positioning between the piece and the working group.

A further advantage is given by the movement of the machining group along two axes (Y,Z) which facilitates the control of the path of the same machining group in the space. The presence of a panel movement element along a further axis (X) allows various configurations of the working space to be achieved while controlling its size.

Furthermore, the use of the bi-rotating head favors the control of the inclination of the machining group. In this way it is possible to maintain the inclination of the tool included in the machining group without the need to stop the machine, dismantle the tools, or change the inclination with the machine turned off or stopped.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for machining workpieces (P), such as wood, glass, fiberglass, plastic, metal, ceramic or similar panels, comprising:
a moving element (2) for moving a piece (P) along a substantially horizontal advancement direction (X);
a group (3) for working said workpiece (P), in its turn comprising a bi-rotary machining head (31), wherein
said working group (3) is able to rotate around a first substantially horizontal axis of rotation and parallel to a first translational direction (Y), which is perpendicular to said advancement direction (X), and
wherein said machining group (3) is able to rotate around a second rotation axis, parallel to a second translation direction (Z), which is substantially perpendicular to said feed direction (X) and to said first translation direction (Y);
a first mechanical member for moving said machining group (3) along said first translational direction (Y); and
a second mechanical member for moving said machining group (3) along said second translation direction (Z).

2. Machine (M) according to claim 1, wherein said first mechanical member comprises at least one sliding guide (41) for moving said working group (3), wherein said guide (41) is integral with a cross member (4) extending along said first translational direction (Y); and wherein said second mechanical member comprises at least one slide (51) for moving said machining group (3), wherein said slide (51) is integral with an upright (5), which extends along said second translation direction (Z).

3. Machine (M) according to claims 1 or 2, wherein said moving element (2) comprises a moving gripper capable of hooking said piece (P) and moving it along said advancement direction (X).

4. Machine (M) according to the preceding claim, wherein said movement gripper (2) comprises at least one jaw equipped with a main body (201) and at least two gripping elements (202), which extend perpendicularly to said advancement direction (X) and projects with respect to said body (201).

5. Machine (M) according to any one of the preceding claims, comprising a means for transporting and supporting said piece (P).

6. Machine (M) according to the preceding claim, wherein said transport and support means comprises a belt or a roller conveyor.

7. Machine (M) according to any one of the preceding claims, comprising a working plane arranged at an angle between 60° and 80° with respect to said horizontal reference, such as a support floor.

8. Machine (M) according to any one of the preceding claims, wherein said working group (3) comprises a boring head (32).

9. Machine (M) according to any one of the preceding claims, wherein said working group (3) comprises a tool (33) for cutting said piece (P).

10. Machine (M) according to any one of the preceding claims, comprising at least one cross slide capable of moving said piece (P) along a first translational direction (Y) and along a second translational direction (Z).

11. Method of operation of a machine (M) for machining pieces (P), such as panels made of wood, glass, fiberglass, plastic, metal, ceramic, or the like, according to any one of the preceding claims, said method comprising the steps of:
A. defining a first working angle of said bi-rotary head around said first axis of rotation substantially parallel to said first translation direction (Y) and a second working angle of said head around said second rotation axis, substantially parallel to said second translation direction (Z);
B. rotating said bi-rotational head by said first and second angles, defined about said first and second rotation axes;
C. moving said panel (P) along said advancement direction (X), which is substantially parallel to a horizontal reference; and
D. moving said working group (3) by means of said first mechanical member along said first translation direction (Y) and/or by means of said second mechanical member along said second translation direction (Z).
